# EUROPEAN PATENT SPECIFICATION

(11) **EP 4 464 764 B1**
(45) Date of publication and mention of the grant of the patent: **25.03.2026**
(21) Application number: 23461588.8
(22) Date of filing: 14.05.2023
(51) Int. Cl.: C12J 1/04, C12J 1/10

(54) **METHOD OF PRODUCING APPLE CIDER VINEGAR BED, THE BED AND ITS USE**
VERFAHREN ZUR HERSTELLUNG EINES APFELWEIN-ESSIGBETTS, DAS BETT UND SEINE VERWENDUNG
PROCÉDÉ DE PRODUCTION DE LIT DE VINAIGRE DE CIDRE DE POMME, LIT ET SON UTILISATION

(43) Date of publication of application: 20.11.2024
(73) Proprietor: Uniwersytet Zielonogórski, 65-417 Zielona Góra (PL)
(72) Inventor: Kliks, Jaroslaw, 66-120 Kargowa (PL); Korycka-Korwek, Justyna, 65-128 Zielona Góra (PL); Mrowczynska, Maria, 65-273 Zielona Góra (PL); Krolicka, Zuzanna, 66-100 Sulechów (PL)
(74) Representative: JD&P Patent Attorneys Joanna Dargiewicz & Partners

(56) References cited:
- HORIUCHI JUN ICHI: "Continuous Acetic Acid Production by a Packed Bed Bioreactor Employing Charcoal Pellets Derived from Waste Mushroom Medium", 2000, pages 126 - 131, XP093090513, Retrieved from the Internet <URL:https://www.sciencedirect.com/science/article/pii/S1389172300887253/pdf?md5=a1f396e1808e2ad43dabcf9aa404810d&pid=1-s2.0-S1389172300887253-main.pdf> [retrieved on 20231011]

## Description

The present invention relates to a method of producing a bed for the production of apple cider vinegar, the bed obtained by this method the use of this bed in the production of apple cider vinegar.

Apple cider vinegar is a traditional product of the culinary arts, known since ancient historical times, which is traditionally obtained as an oxidation product of apple cider, i.e. a low-alcohol drink resulting from the alcoholic fermentation of apple juice. Apple cider vinegar is produced by the aerobic bacteria Acetobacter, which form a characteristic dross on the surface of the solution. For a proper acetic fermentation process, three factors must be met: a sufficiently high concentration of oxygen available to the bacteria, alcohol content and, advantageously, the presence of a source of simple sugars in the environment.

Chinese patent application CN105018384A describes an Acetobacter strain belonging to the field of industrial microorganisms and its use in fermenting apple cider vinegar. The Acetobacter strain is *Acetobacter pasteurianus* strain CYD1S9, which was deposited in the China Center for Type Culture Collection on 30 June 2015. The address of the collection is Wuhan University, Wuhan, PRC, and the collection number is CCTCC NO: 2015418. The strain has a higher acid production capacity (up to 110 g/l or more). Apple cider vinegar fermented with the Acetobacter strain is obtained with high yield and has a favourable taste, making *Acetobacter pasteurianus* strain CYD159 a suitable Acetobacter strain for obtaining apple cider vinegar.

Korean patent publication KR102263129B1 relates to a method of making apple cider vinegar and apple cider vinegar produced by said method. The method includes: (1) the step of preparing apple concentrate by concentrating apple juice; (2) the step of preparing concentrated apple wine by inoculating a culture solution of *Saccharomyces cerevisiae* strain into the prepared apple concentrate from step (1) and culturing it; (3) the step of preparing an acetic starter in the prepared concentrated apple wine of step (2) by inoculating the mixture with a culture of the strain *Acetobacter pasteurianus,* to which the prepared apple concentrate of step (1) and its culture are added; and (4) the step of acetic fermentation of the mixture, in which the prepared acetic starter of step (3) is added to the prepared concentrated apple wine of step (2). Horiuchi Jun Ichi: "Continuous Acetic Acid Production by a Packed Bed Bioreactor Employing Charcoal Pellets Derived from Waste Mushroom Medium" (2000) discloses a bed for the production of vinegar said bed comprising charcoal pellets and also refers to other types of beds such fibres, carrageenan, ceramics and glass beads.

Traditionally, cider vinegars are made by exposing the cider to oxygen over as large a surface area as possible, thus increasing the surface area in contact with oxygen. The methods used by some wineries also use coarsely cut oak chips to increase the surface area as well as to impart sensory characteristics. However, each of the methods mentioned is a batch method, meaning that the vessel in which the process is carried out is periodically filled with substrate and the product is removed at the end of the process.

There is still a need in the field for new methods of obtaining apple cider vinegar, especially in a continuous process, as well as new beds that can be used to produce apple cider vinegar especially in a continuous process.

The aim of the present invention was to develop a method of obtaining a bed for the production of apple cider vinegar by fermentation using the aerobic bacteria Acetobacter.

This objective was achieved by the method, the bed and its use according to the present invention. Thus, the subject matter of the invention is the method of producing a porous bed for a tubular bioreactor for the production of acetic acid, characterised in that it comprises steps in which: (a) an apple pomace is vacuum dried at 40 to 80°C, preferably 50 to 70°C, until a product with a moisture content of 40% is obtained; (b) the material obtained is subjected to further drying, preferably in a convection dryer, at a temperature of 100 to 110°C, preferably 105°C, until a product with a moisture content of 20% is obtained; (c) the apple pomace with a moisture content of 20% is mixed with charcoal, preferably apple charcoal, silicon oxide, calcium carbonate and calcium sulphate and crushed, followed by the addition of an aqueous glass solution and the whole mixture is mixed, wherein the quantities of the individual components are as follows: apple pomace with a moisture content of 20% (61.82%), charcoal (30.91%), silicon oxide SiO₂ (0.46%), aqueous glass, solution of 10% by weight in water (6.18%), calcium carbonate anhydrous (0.31%), calcium sulphate anhydrous (0.31%); (d) the resulting mass is extruded in an extruder operating at a screw speed of 200 rpm, a compression ratio of 1.75 and a heating power of 2kW to produce extrudates with a diameter of 20-30 mm, preferably 25 mm; (e) the extrudates are allowed to rest for 24 h.

According to the present invention, a specially prepared bed consisting of a porous material, such as carbon-apple extrudate, is used as the filling of a tubular bioreactor in which the apple cider vinegar production process is carried out continuously, i.e. the nutrient solution is fed into the bed at the same time, as well as the product in the form of fermentation fluid containing acetic acid is collected.

The object of the invention is illustrated in the figures of the drawing, where:
Fig. 1 shows the fermentation system, bioreactor and equipment;
Fig. 2 illustrates the fermentation dynamics for a continuous process in a bioreactor.

### EXAMPLES

### Example 1 - the method of production of a porous bed

The bed for filling the tubular bioreactor was produced by extrusion. The components of the bed and their proportions are shown in Table 1. The apple pomace, representing 61.82% of the mixture by weight, was pre-dried according to the following scheme:
- 100 kg of apple pomace was vacuum dried in an evaporator (temperature 60°C, vacuum pressure 60 000 Pa) to obtain products in the form of cellular water and aromatic fraction. Evaporator drying was carried out until a product with a moisture content of 40% was obtained. The material was then transferred to a convection dryer, where it was dried at 105°C until a moisture content of 20% was obtained. The apple pomace together with charcoal, silicon oxide, calcium carbonate and calcium sulphate were transferred to a beater mill for grinding. An aqueous glass solution was then added in the mixer in the amount provided in the recipe below. After mixing, the mass was transferred to an extruder operating at a screw speed of 200 rpm, a compression ratio of 1.75 and a heating power of 2 kW. The resulting extrudates had a diameter of 25 mm and were aged for 24 h after the process.

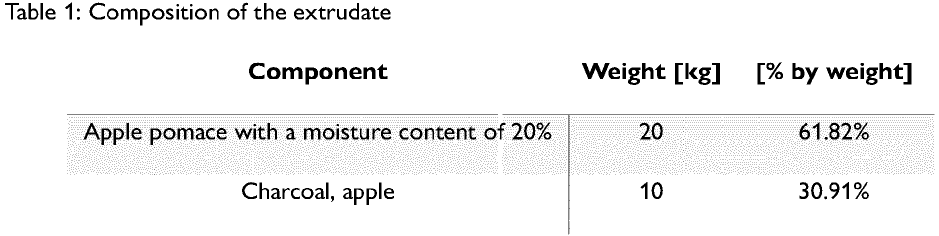

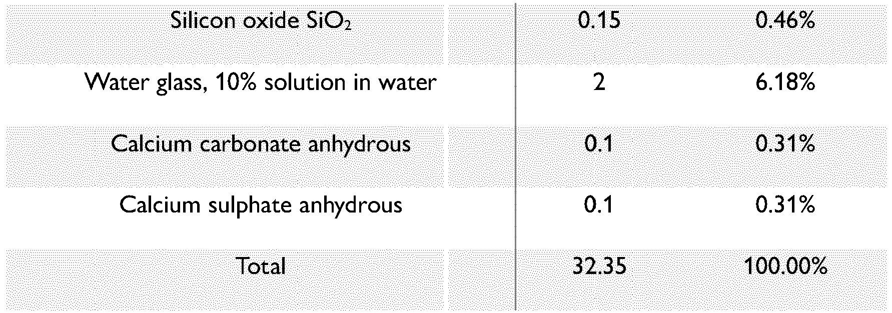

Bed preparation also included crushing the resulting porous mass of extrudates to grind them to a size that would fit into the tubular reactor cylinder. After crushing, the bed was poured into the reactor and washed twice with 5 l of distilled water at room temperature (20°C). The bioreactor was then flooded with a solution of the composition shown in Table 2 and left to condition for 48 h. During bed conditioning, a pure oxygen flow rate of 10 ml/min was applied. After this time, the conditioning solution was collected via a peristaltic pump.

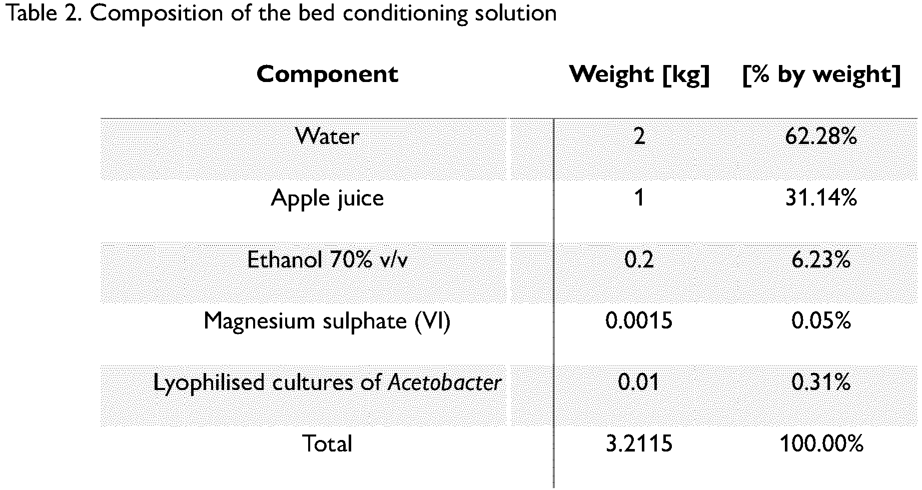

The bed prepared in that way was ready for the fermentation process.

### Example 2 - carrying out the acetic fermentation process and its effects

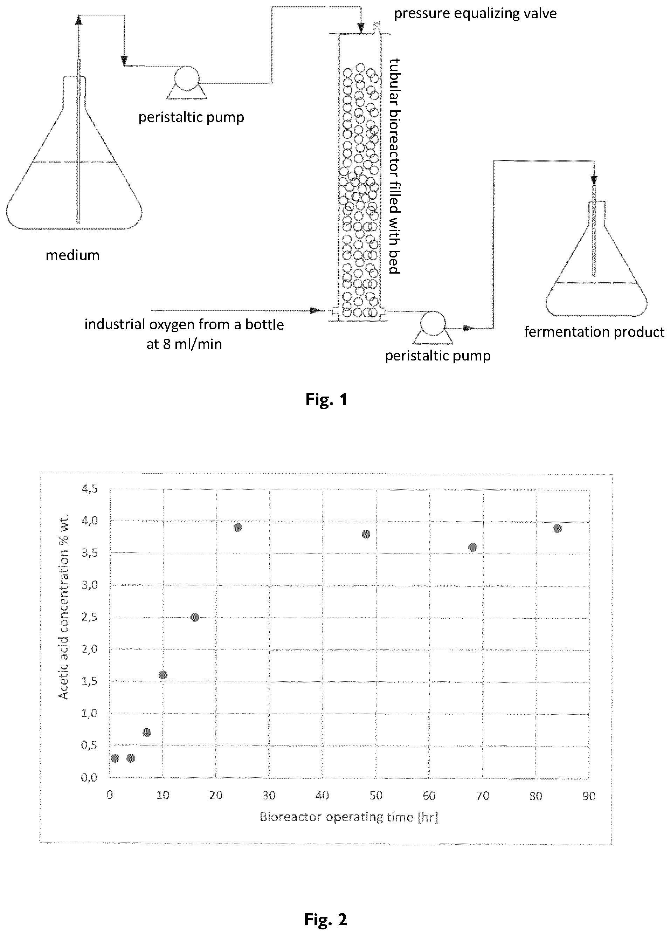

A fermentation system was prepared according to the scheme shown in Fig. 1. The fermentation medium was cider containing 5.2% by weight ethanol and 20 g/dm³ glucose. The fermentation medium was fed into the bioreactor at a volume rate of 30 cm³/h, the working volume of the reactor was 2 dm³, the retention time of the medium in the reactor was 66.6 h. The nutrient solution was injected into the bed from the top and flowed freely down the reactor. Technical oxygen was injected from the bottom of the reactor, oxygen pressure 110 000 Pa, oxygen volume intensity 480 cm³/h. At the top of the bioreactor was a pressure equalisation valve, in the form of a tube plugged with a movable glass ball. The valve allowed the fermentation gases to escape freely from the bioreactor. The fermentation product was collected at the bottom of the tube and transported by a peristaltic pump to the product tank.

Fig. 1 shows the fermentation system, a bioreactor with equipment.

The use of a porous bed in the tubular bioreactor allowed the multiplication of Acetobacter and their immobilisation. Feeding the medium and oxygen in a countercurrent manner significantly increased the fermentation dynamics. The fermentation product in the form of apple cider vinegar was obtained using a continuous method, i.e. the volume intensity of the medium fed was equal to the volume intensity of the fermentation product (apple cider vinegar) received.

### Example 3 - Process flow and end results of fermentation

Fig. 2 shows the dynamics of fermentation changes in the apple cider vinegar received from the bioreactor during the continuous process. It can be observed that the first 24 hours of the process were a period of gradual increase in the concentration of acetic acid in the receiving fermentation medium. This was related to the biomass multiplication period and the need for the dynamic equilibrium in the reactor to establish itself.

After 24 hours, the maximum productivity of the bioreactor was reached, which allowed receiving continuous digested substrate containing between 3.6 and 3.9% acetic acid. In the receiving medium, 1 to 2.3 g/dm³ glucose and 0.2 to 0.55% ethanol were determined.

The resulting product after biomass centrifugation was ready-to-eat apple cider vinegar.

Fig. 2 shows the fermentation dynamics for a continuous process in a bioreactor.

## Claims

1. A method of producing a porous bed for a tubular bioreactor for the production of acetic acid, **characterised in that** it comprises steps in which:
(a) an apple pomace is vacuum dried at 40 to 80°C, preferably 50 to 70°C, until a product with a moisture content of 40% is obtained;
(b) the material obtained is subjected to further drying, preferably in a convection dryer, at a temperature of 100 to 110°C, preferably 105°C, until a product with a moisture content of 20% is obtained;
(c) the apple pomace with a moisture content of 20% is mixed with charcoal, preferably apple charcoal, silicon oxide, calcium carbonate and calcium sulphate and crushed, followed by the addition of an aqueous glass solution and the whole mixture is mixed, wherein the quantities of the individual components are as follows: 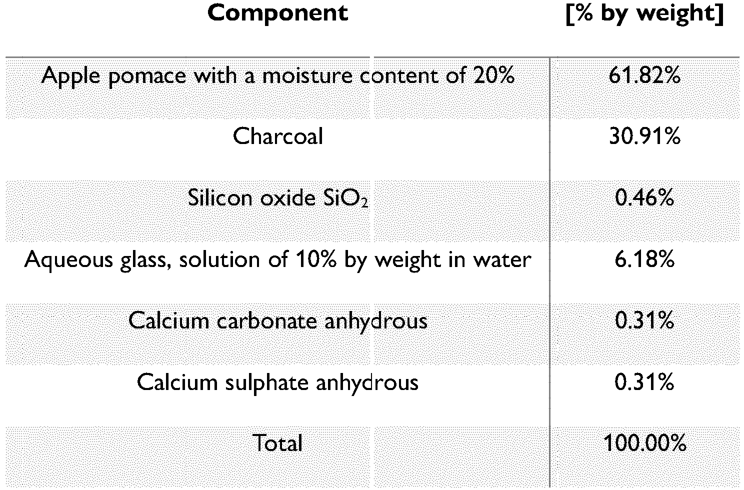
(d) the resulting mass is extruded in an extruder operating at a screw speed of 200 rpm, a compression ratio of 1.75 and a heating power of 2kW to produce extrudates with a diameter of 20-30 mm, preferably 25 mm;
(e) the extrudates are allowed to rest for 24 h.

2. The method according to claim 1, **characterised in that** in step (a) the apple pomace is vacuum dried at a temperature of 60°C and a pressure of 60 000Pa.

3. The method according to claim 1 or 2, **characterised in that** it further comprises a conditioning step in which the extrudates are crushed, rinsed with distilled water at room temperature, and poured over a solution of the following composition: 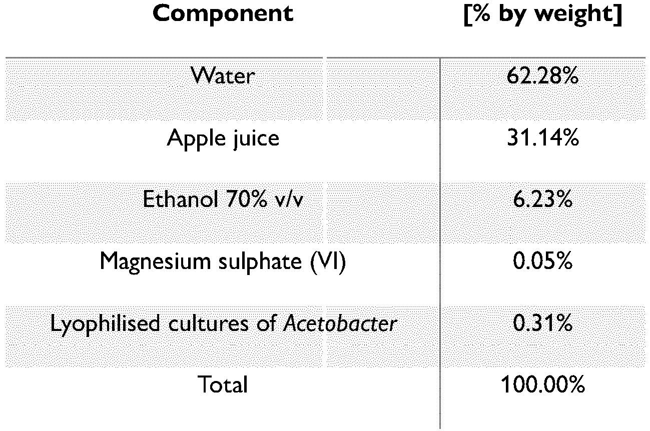 and left for 48 h using a pure oxygen flow rate of 10 ml/min.

4. A bed for a tubular bioreactor for acetic acid production obtained by the method defined in any of the claims 1 to 3.

5. A use of the bed according to claim 4 or obtained by the method defined in any of the claims 1-3 as a filling for a tubular bioreactor for the production of acetic acid.

## Patentansprüche

1. Verfahren zur Herstellung eines porösen Bettes für einen Rohr-Bioreaktor für die Herstellung von Essigsäure, **dadurch gekennzeichnet, dass** das Verfahren Schritte umfasst, bei denen:
(a) ein Apfel-Trester bei 40°C bis 80 °C vakuumgetrocknet wird, vorzugsweise bei 50°C bis 70 °C, bis ein Produkt mit einem Feuchtigkeitsgehalt von 40 % erhalten wird;
(b) das erhaltene Material weiterer Trocknung unterzogen wird, vorzugsweise in einem Konvektionstrockner, bei einer Temperatur von 100 °C bis 110 °C, vorzugsweise bei 105 °C, bis ein Produkt mit einem Feuchtigkeitsgehalt von 20 % erhalten wird;
(c) der Apfel-Trester mit einem Feuchtigkeitsgehalt von 20 % mit Holzkohle, vorzugsweise Apfel-Holzkohle, Siliziumoxid, Calciumcarbonat und Calciumsulfat gemischt wird und zerkleinert wird, gefolgt von der Zugabe einer wässrigen Glaslösung, und das gesamte Gemisch gemischt wird, wobei die Mengen der einzelnen Komponenten wie folgt sind:
| **Komponente** | **[Gew.-%]** |
|---|---|
| Apfel-Trester mit einem Feuchtigkeitsgehalt von 20 % | 61,82 % |
| Holzkohle | 30,91 % |
| Siliziumoxid SiO₂ | 0,46 % |
| Wässriges Glas, Lösung mit 10 Gewichtsprozent in Wasser | 6,18 % |
| Calciumcarbonat, wasserfrei | 0,31 % |
| Calciumsulfat, wasserfrei | 0,31 % |
| Gesamt | 100,00 % |
(d) die erhaltene Masse in einem Extruder extrudiert wird, der mit einer Schraubengeschwindigkeit von 200 U/min, einem Kompressionsverhältnis von 1,75 und einer Heizleistung von 2 kW betrieben wird, um Extrudate mit einem Durchmesser von 20 bis 30 mm, vorzugsweise 25 mm, herzustellen;
(e) man die Extrudate 24 h ruhen lässt.

2. Verfahren nach Anspruch 1, **dadurch gekennzeichnet, dass** im Schritt (a) der Apfel-Trester vakuumgetrocknet wird bei einer Temperatur von 60 °C und einem Druck von 60 000 Pa.

3. Verfahren nach Anspruch 1 oder 2, **dadurch gekennzeichnet, dass** es weiterhin einen Konditionierungsschritt umfasst, bei dem die Extrudate zerkleinert werden, mit destilliertem Wasser bei Raumtemperatur gespült werden, und mit einer Lösung der folgenden Zusammensetzung übergossen werden:
| **Komponente** | **[Gew.-%]** |
|---|---|
| Wasser | 62,28 % |
| Apfelsaft | 31,14 % |
| Ethanol 70 % Vol./Vol. | 6,23 % |
| Magnesiumsulfat (VI) | 0,05 % |
| Lyophiliserte Kulturen von *Acetobacter* | 0,31 % |
| Gesamt | 100,00 % |
und 48 h unter Verwendung einer Flussrate von 10 ml/min reinen Sauerstoffs 48 h belassen werden.

4. Bett für einen Rohr-Bioreaktor für die Herstellung von Essigsäure, erhalten durch ein Verfahren nach einem der Ansprüche 1 bis 3.

5. Verwendung des Bettes gemäß Anspruch 4 oder erhalten über ein Verfahren wie in einem der Ansprüche 1 bis 3 definiert für eine Füllung eines Rohr-Bioreaktors für die Herstellung von Essigsäure.

## Revendications

1. Procédé de production d'un lit poreux pour un bioréacteur tubulaire pour la production d'acide acétique, **caractérisé en ce qu'**il comprend des étapes dans lesquelles :
(a) un marc de pomme est séché sous vide à 40 à 80°C, de préférence 50 à 70°C, jusqu'à ce qu'un produit ayant une teneur en humidité de 40 % soit obtenu ;
(b) le matériau obtenu est soumis à un séchage supplémentaire, de préférence dans un four à convection, à une température de 100 à 110°C, de préférence 105°C, jusqu'à ce qu'un produit ayant une teneur en humidité de 20 % soit obtenu ;
(c) le marc de pomme ayant une teneur en humidité de 20 % est mélangé avec du charbon, de préférence du charbon de pomme, de l'oxyde de silicium, du carbonate de calcium et du sulfate de calcium et le tout est broyé, opération suivie de l'addition d'une solution de verre soluble, et tout le mélange est mélangé, dans lequel les quantités des composants individuels sont les suivantes :
| **Composant** | **[% en poids]** |
|---|---|
| Marc de pomme ayant une teneur en humidité de 20 % | 61,82 % |
| Charbon | 30,91 % |
| Oxyde de silicium SiO₂ | 0,46 % |
| Verre soluble, solution aqueuse à 10 % en poids | 6,18 % |
| Carbonate de calcium anhydre | 0,31 % |
| Sulfate de calcium anhydre | 0,31 % |
| Total | 100,00 % |
(d) la masse résultante est extrudée dans une extrudeuse fonctionnant à une vitesse de vis de 200 t/min, un taux de compression de 1,75 et une puissance de chauffage de 2 kW pour produire des extrudats ayant un diamètre de 20 à 30 mm, de préférence 25 mm ;
(e) les extrudats sont laissés à reposer pendant 24 heures.

2. Procédé selon la revendication 1, **caractérisé en ce que**, dans l'étape (a), le marc de pomme est séché sous vide à une température de 60°C et sous une pression de 60 000 Pa.

3. Procédé selon la revendication 1 ou 2, **caractérisé en ce qu'**il comprend en outre une étape de conditionnement dans laquelle les extrudats sont broyés, rincés à l'eau distillée à la température ambiante, et versés sur une solution ayant la composition suivante :
| **Composant** | **[% en poids]** |
|---|---|
| Eau | 62,28 % |
| Jus de pomme | 31,14 % |
| Ethanol à 70 % v/v | 6,23 % |
| Sulfate de magnésium (VI) | 0,05 % |
| Cultures lyophilisées *d'Acetobacter* | 0,31 % |
| Total | 100,00 % |
et laissés pendant 48 heures avec utilisation d'un débit d'oxygène pur de 10 ml/min.

4. Lit pour un bioréacteur tubulaire pour la production d'acide acétique obtenu par le procédé défini dans l'une quelconque des revendications 1 à 3.

5. Utilisation du lit selon la revendication 4 ou obtenu par le procédé défini dans l'une quelconque des revendications 1 à 3 en tant que charge de remplissage pour un bioréacteur tubulaire pour la production d'acide acétique.
